Europäisches Patentamt

European Patent Office

Office européen des brevets

(11) Publication number: **0 197 080**
**B1**

# EUROPEAN PATENT SPECIFICATION

(45) Date of publication of patent specification: **07.03.90**

(21) Application number: **85904841.5**

(22) Date of filing: **23.09.85**

(86) International application number:
**PCT/GB85/00439**

(87) International publication number:
**WO 86/02407 24.04.86 Gazette 86/09**

(51) Int. Cl.⁵: **F 02 D 19/10, F 02 D 31/00,**
**F 02 D 41/26, F 02 D 41/10,**
**F 02 D 41/12**

(54) FUEL CONTROL SYSTEM.

(30) Priority: **10.10.84 GB 8425577**
**19.04.85 US 725299**

(43) Date of publication of application:
**15.10.86 Bulletin 86/42**

(45) Publication of the grant of the patent:
**07.03.90 Bulletin 90/10**

(84) Designated Contracting States:
**AT BE CH DE FR GB IT LI LU NL SE**

(56) References cited:
**EP-A-0 044 289**
**EP-A-0 078 762**
**EP-A-0 108 582**
**FR-A-2 273 953**
**FR-A-2 540 940**
**US-A-4 278 064**
**US-A-4 430 978**

(73) Proprietor: **GASPOWER INTERNATIONAL**
**LIMITED**
**Gosforth Road Ascot Drive Industrial Estate**
**Derby DE2 8HY (GB)**

(72) Inventor: **SMITH, Peter, Rowan**
**9 Parkside Garden**
**Wollaton Nottingham NG8 2PP (GB)**

(74) Representative: **Leach, John Nigel et al**
**FORRESTER & BOEHMERT Widenmayerstrasse**
**4/I**
**D-8000 München 22 (DE)**

Courier Press, Leamington Spa, England.

## Description

This invention relates to a fuel control system for a compression ignition internal combustion engine capable of operation on both a gaseous fuel and diesel fuel. Optionally the engine may be fuelled by diesel fuel alone. In this specification the term "compression ignition" is intended to refer not only to an engine operating on a constant pressure, i.e. diesel, cycle, but also an engine operating on a compression ignition cycle.

It is known to provide engines which operate using both a liquid and a gaseous fuel such as diesel and methane or propane; such engines are often termed "dual fuel engines".

Existing dual fuel compression ignition engines are often operated on diesel only for part of the operating range of the engine and on a mixture of diesel and gaseous fuel for the rest of the operating range. In many cases the gaseous fuel flow rate is subject to very little control. Sometimes the gaseous fuel flow rate is controlled by air intake rate to the engine. In other engines a governor for the liquid fuel is used in an attempt to control the gaseous fuel flow rate.

In EP—A—108 582 a dual fuel engine is described in which the diesel fuel pressure conditions at a diesel oil injection metering device during a diesel fuel mode are mimicked during the dual fuel mode and a pressure sensor measures the mimicked diesel fuel pressure and controls the amount of gas flow to the engine via an electronic programmable control.

US—A—4278064 discloses a hard-wired control system for a constant speed gas fuelled engine in which the position of the fuel rack is sensed and used to minimise engine speed fluctuation, as the load on an alternator driven by the engine varies, by controlling the amount of diesel supplied to the engine.

These arrangements have never been completely satisfactory because they do not permit of the continuously variable control of the gaseous fuel flow rate in a way which permits optimisation of the engine performance and irrespective of kind of fuel injection system with which the engine is provided.

Microprocessor based control systems utilising engine speed and speed control position have been previously proposed only in relation to the control of diesel fuel in a conventional diesel engine (FR—A—2273953; EP—A—44289 and EP—A—78762).

An object of the present invention is to provide a new or improved fuel control system for a compression ignition engine capable of operation on both a gaseous fuel and diesel fuel.

According to the present invention there is provided a fuel control system of a compression ignition engine operable on both gaseous and diesel fuels and having means to inject diesel fuel into the engine and a speed control, comprising an electronic signal processing means operable in accordance with a programme, means responsive to the engine speed to provide an input signal to said processing means, gas flow rate control means to control the flow of the gaseous fuel at a variable rate, whereby the speed of the engine is continuously variable, responsive to an output signal of said processing means and derived from said input signal by operating thereon with said processing means under the control of said programme and diesel fuel control means controlling the injection of the diesel fuel so that the volume injected does not exceed a predetermined maximum volume characterised by a transducer to sense engine speed and provide an input to the processing means which is indicative of engine speed, the input signal to said processing means being also dependent on the setting of the speed control, and wherein the processing means comprises gaseous fuel flow rate determination means:—

a) to control the gaseous fuel flow rate as a function of the instantaneous engine speed when the speed demanded is greater than the engine speed, and to control the gaseous fuel flow rate as a function of the difference between the engine speed and the speed demanded used as a signal for a control loop calculation, when the speed demanded is less than, or equal to, the engine speed or

b) to control the gaseous fuel flow rate as a function of the output setting of a diesel fuel flow rate governor to determine therefrom a desired gaseous fuel flow rate.

The gas flow rate control means is preferably connected to a gaseous fuel inlet for each engine cylinder by individual pipes.

Other features which may be favorable when using the invention are set out in the dependant claims.

Reference is now made to the accompanying drawings, in which:—

Figure 1 is a schematic view of one embodiment of a fuel control system according to the invention;

Figure 2 is a schematic view of the fuel control system shown in Figure 1 applied to an engine;

Figure 3 is a further schematic view of the fuel control system shown in Figure 1 applied to an engine;

Figure 4 is a schematic view of a further embodiment of fuel control system according to the invention;

Figure 5 is a schematic view of the fuel control system shown in Figure 4 applied to an engine;

Figure 6 is a further schematic view of the fuel control system shown in Figure 4 applied to an engine;

Figure 7 is a schematic view of a railway locomotive embodying the engine of Figures 5 and 6; and

Figure 8 is a schematic view of a fuel injection pump used in the engine of Figures 2 and 3 and Figures 5 and 6.

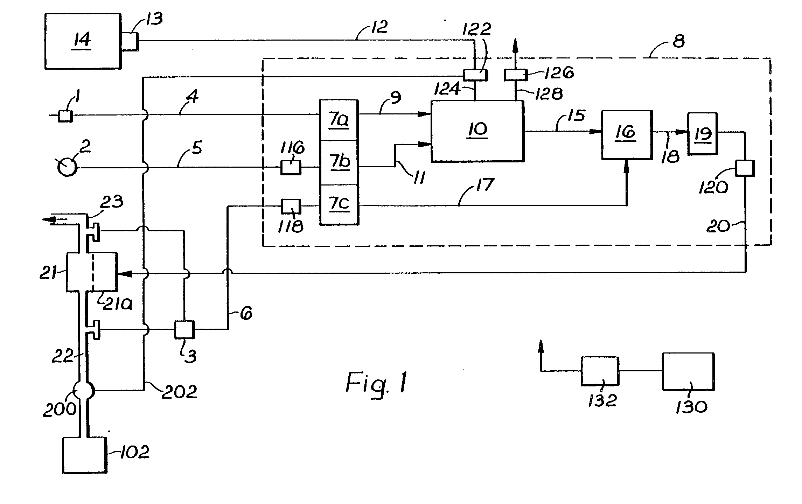

Shown in Figure 1 is a fuel control system which is particularly suitable for diesel engines used in road vehicles. The control system includes an engine speed transducer 1, which senses the instantaneous speed of the engine, a speed demand transducer 2, which senses the position or setting of a speed control, and a gaseous fuel pressure difference transducer 3. The speed transducer 1, speed demand transducer 2 and the pressure difference transducer 3 provide electrical signals which provide information about the engine speed, speed demand and pressure differences respectively. The transducers are connected to gas and liquid fuel flow rate control means in the form of a microprocessor-based controller 8 (shown in dotted lines) via lines 4, 5 and 6 respectively.

The line 4 is connected to an input filter 7a, and the input filter 7a is connected to provide an input to a control algorithm program of the microprocessor 8 by a line 9. For convenience this program is referred to herein as "control algorithm 10". The line 5 is connected to an input filter 7b, and the input filter 7b is connected to the control algorithm 10 of the microprocessor 8 by a line 11. The line 6 is connected to an input filter 7c and the input filter 7c is connected to first storage means in the form of a look-up table 16 by a line 17.

Analogue to digital converters 116 and 118 are provided in the lines 5 and 6 respectively in order to convert the analogue signal generated by the transducers 2 and 3 to a digital signal. This is not required in the line 4 because the speed transducer 1 generates pulses representative of the engine speed. Amplifiers (not shown) to effect signal conditioning may be provided in the lines 4, 5, 6, 20.

The control algorithm 10 is connected to a solenoid driver circuit 122 via a line 124. The solenoid driver circuit 122 is connected to a stop means in the form of an electromechanical device 13 via a line 12. In addition the solenoid driver circuit 122 is connected to a solenoid valve 200 in a gas fuel supply pipe 22, via a line 202.

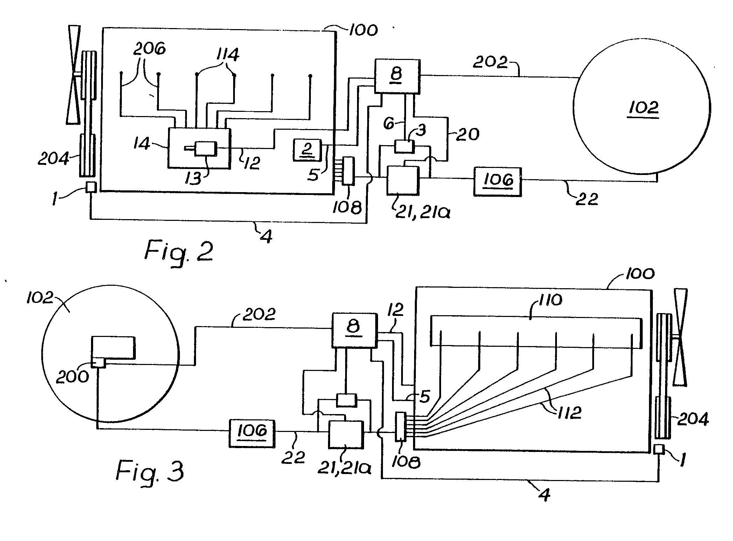

The electromechanical device 13 is operatively connected to a diesel injection pump 14 on an engine 100 (see Figures 2 and 3).

As shown diagrammatically in Figure 8, the injection pump 14 comprises a plurality of pistons 60 reciprocable in cylinders 61 by an engine driven camshaft 62. As the piston 60 moves downwardly it uncovers an intake port 63 through diesel fuel enters due to pressure in the delivery system to the pump. When the piston returns, diesel trapped above the piston after the piston has closed the intake port 63 is pressurised and fed along pipes 206 to an associated diesel fuel injector 114 of conventional type. A discrete volume or slug of fuel is fed to the cylinder for each power stroke of the engine piston. The volume of the slug is dependent upon the volume of diesel which is pumped by the associated injector pump piston. By varying the volume of liquid pumped, the amount of fuel fed to the engine can be varied. In the present example the pump is a Bosch type injector pump and hence the delivered quantity is varied by rotating the piston. The compression chamber 64 above the piston is connected to the space below the head of the piston by a longitudinal groove 65 (or hole) in the piston 60 and the head of the piston is provided with a skirt 66 of varying length. So long as the skirt covers an exit port 67 the pump delivers fuel. When the exit opening is uncovered, however, delivery ceases because then the rest of the fuel from above the piston can flow away through the longitudinal groove 65 into the space below whence it is discharged through the exit port. Rotation of the piston causes the exit opening to be covered for a longer or shorter time so that the delivery rate is varied. The adjustment is achieved by rotating the piston through the agency of a toothed rack 68 engaged with a pinion 69 formed on the piston 60. Such a variable capacity injector pump which pumps discrete volumes of fuel is well known and the above brief description is included solely for the purpose of explaining clearly the type of injection pump with which the present embodiment is concerned.

Thus, the amount of fuel injected into the engine varies with the volume of diesel pumped in discrete volumes or slugs by each piston of the injector pump. If desired any other suitable type of variable pump and capacity injector pump may be used instead of the Bosch type described hereinbefore. In this example the electromechanical device 13 comprises an air ram (for example the Enois type 60052100015) actuated by a solenoid (such as the Webber type 3363416/12 volts DC). The air ramp is operable to move stops into the path of movement of the control rack 68 of the pump 14 to arrest movement of the rack in the "increase fuel" direction so as to prevent the supply of diesel above a predetermined amount.

An engine speed governor G controls the injection pump 14. This engine speed governor is a conventional governor which determines the amount of fuel which should be supplied to the cylinder through the injection pump 14. The fuel requirement determined by the governor would, in the absence of operative connection of the device 13, be the amount required if the engine was being operated on diesel fuel only. An alternative form of electromechanical device 13 could instead be operatively connected to the engine speed governor G. The device 13 would again be operable to limit the amount of fuel supplied to the engine to not more than a predetermined amount. The governor may, for example, be the Bosch RQV governor. The injection pump 14 may be the Bosch PES type injector pump. The control algorithm 10 and the device 13 comprise liquid fuel flow rate determination means.

The control algorithm 10 is connected to the look-up table 16 via a line 15, and the look-up table 16 is connected to an output filter 19 via a line 18. The control algorithm 10 and look-up table 16 comprise gaseous fuel flow rate determination means.

The input filters 7a, 7b, 7c and output filter 19 are low pass filters which serve to remove any transient noise present and to increase the resolution.

The output filter 19 is connected via line 20 to valve means in the form of a gaseous fuel valve actuator 21a and a gaseous fuel flow rate control means comprising a valve 21. The gaseous fuel valve actuator 21a serves to actuate the gaseous fuel flow rate control valve 21 in order to regulate the flow rate of gaseous fuel along the gaseous fuel pump 22. The gaseous fuel valve actuator 21a may be a Heinzmann EIP rotary actuator with closed loop feedback control electronics, and the gaseous fuel flow rate control valve 21 may be a modified rotary LPG gas valve.

A digital to analogue converter 120 is provided in the line 20 to convert the digital output signal of the look-up table 16 into an analogue signal. An amplifier (not shown) to effect signal conditioning may be provided in the line.

The control algorithm 10 is connected to a lamp driver circuit 126 via line 128. The lamp driver circuit may be connected to and operate plurality of lamps (not shown) provided on a control panel (not shown).

The fuel control system may be powered through a vehicle battery 130 via a power supply circuit 132.

Figures 2 and 3 show the fuel control system of Figure 1 on a diesel engine 100, and like parts have been designated with like reference numerals. The speed demand transducer 2, which can be a Lucas type 73169A throttle transducer, and the speed transducer 1, which may be a Lucas type 4CS passive induction pickup, are both mounted to the engine 100. The speed transducer 1 is mounted to the engine 100 adjacent a crankshaft pulley 204.

A gaseous fuel supply tank 102 is provided with a solenoid valve 200 which is actuatable by the solenoid driver circuit 122 to permit the flow of gaseous fuel along the gaseous fuel supply pipe 22. A heat exchanger 106 is provided in the supply pipe 22 to exchange heat with cooling fluid in an engine cooling system (not shown). The supply pipe 22 is connected to a gas distributor 108 which is connected to a gaseous fuel inlet 110 for each engine cylinder (not shown) by pipes 112. The gaseous fuel inlets 110 may also serve as air inlets for each cylinder.

The injection pump 14 is connected to the diesel fuel inlets 114 for each engine cylinder via pipes 206.

The operation of the fuel control system shown in Figures 1 to 3 is as follows.

The speed transducer 1 generates a digital signal representative of the engine speed which is transmitted via line 4 to the filter 7a. The filter 7a filters the signal from where it is transmitted via line 9 to the control algorithm 10.

The speed demand transducer 2 generates an analogue signal, representative of the speed control setting and hence of the speed demanded by the speed control, which is transmitted via line 5 and converted into a digital signal by the analogue to digital converter 116. The signal is transmitted to the filter 7b along line 5, and the filter 7b filters the signal and transmits it along the line 11 to the control algorithm 10.

The pressure difference transducer 3 generates an analogue signal indicative of the difference in gaseous fuel pressure across the valve 21, which is transmitted via line 6 and is converted to a digital signal by analogue to digital converter 118. The signal is transmitted from the analogue to digital converter 118 to the filter 7c, and the filter 7c filters the signal and transmits it via line 17 to the look-up table 16.

The operation of the control algorithm 10 is as follows.

When the engine is started the program variables are initialised. The microprocessor-based controller 8 is provided with a watchdog circuit which is regularly pulsed during operation of the engine. In addition, when the engine is started the control algorithm 10 signals the solenoid driver circuit 122 on line 124 which causes the solenoid driver circuit 124 to transmit a signal via line 202 to open the valve 200.

The control algorithm 10 compares the speed demand signal on line 11 with the engine speed signal on line 9 and determines whether the speed demanded is greater than the engine speed. If it is greater, then the desired gaseous fuel flow rate is calculated as a function of the instantaneous engine speed so that the desired gaseous fuel flow rate is proportional to the instantaneous engine speed. A signal indicating the desired gaseous fuel flow rate is transmitted along line 15 to the look-up table 16.

If the speed demanded is not greater than the engine speed then the difference between the engine speed and the speed demanded is used as an error signal for a proportional and derivative control loop calculation to produce a desired gaseous fuel flow rate which is proportional to the difference between the engine speed and the speed demanded. A signal indicating the desired gaseous fuel flow rate is fed along line 15 to the look-up table 16.

The control algorithm 10 operates such that the value of the calculated flow rate is compared with the maximum allowable flow rate for the instantaneous engine speed (which is known for any particular engine and engine speed) and if the calculated flow rate is greater than this maximum value, then the value of the calculated flow rate is replaced with the maximum value.

The look-up table 16 contains information concerning opening of the valve 21 as a function of the desired gaseous fuel flow rate and of the pressure differences across the valve 21. The look-up table 16 is used to determine the signal representative of the desired gaseous fuel flow rate using the signal on line 15 and the signal on line 17. This determined signal is transmitted via line 18 to the filter 19. It is then fed along line 20 through the digital to analogue converter to the gas valve actuator 21a which actuates the valve 21 thereby controlling the gaseous flow rate.

The control algorithm 10 also produces signals to actuate the electromechanical device 13 via the solenoid driver circuit 122, and to actuate lamp driver circuit 126.

The control algorithm 10 operates such that the electromechanical device 13 prevents the injection pump 14 from delivering per stroke more than a fixed percentage of the liquid fuel which would be supplied at full throttle and governed speed on diesel fuel operation alone. An example of a typical fixed percentage is 10% but the percentage may lie in the range 5% to 20%. The device 13 does not prevent the pump 14 from delivering less than the fixed percentage.

To operate the engine using diesel fuel alone, a switch is provided whereby the control system described above is de-energised and hence no gas passes to the engine and the electromechanical device 13 is inoperative and, therefore, the fuel injection pump operates conventionally.

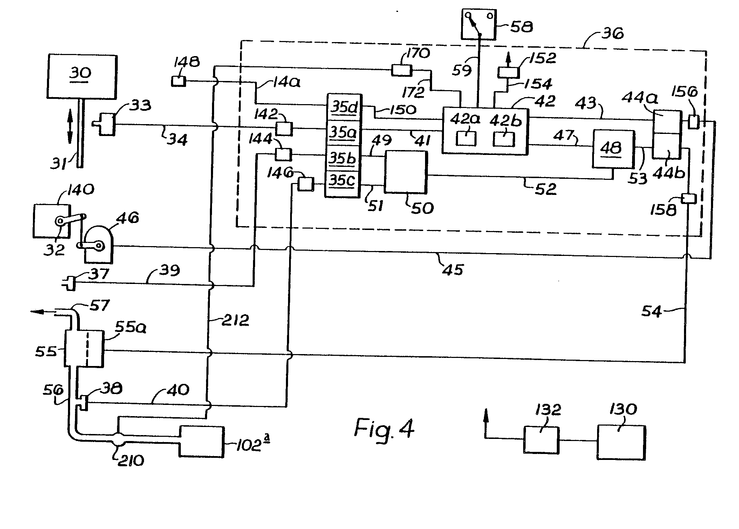

In Figure 4 a fuel control system is shown which is particularly suitable for use with diesel engines used on railway locomotives. The fuel control system is used to control the proportions in which liquid fuel and gaseous fuel is supplied to the engine.

The engine is provided with an engine speed governor 30 to which is fed information concerning engine speed and speed control setting. The output of the governor may be modified by variations in exhaust gas temperature, engine wheel slip and several other variables. Typically the engine speed governor 30 might be of the type known as the Woodward PG electro-hydraulic governor.

The governor 30 is provided with an operating link 31 which in conventional engines operating on liquid fuel only is connected to an operating arm 32, which is in turn connected to liquid fuel injection pumps 140 of the engine. The pumps 140 are variable capacity injection pumps of the same type as described in connection with the first embodiment and hence as are shown diagrammatically in Figure 8. The amount of diesel supplied therefore to the engine depends upon the instantaneous pumping capacity of the injection pumps. The position of the operating arm 32 determines the amount of liquid fuel fed to the engine cylinders via the injection pumps 140, and hence the position of the operating link 31 is functionally linked to the amount of liquid fuel required by the engine.

With the control system of the present invention, which comprises a microprocessor-based controller 36 (shown in dotted line), the operating link 31 is disconnected from the operating arm 32 so that the governor 30 can no longer directly control the amount of liquid fuel fed to the cylinders using the operating link 31.

A position transducer 33 provides a signal indicative of the position of the operating link 31. In this way the signal generated by the position transducer 33 is indicative of the amount of liquid fuel which the governor 30 wishes to deliver to the engine. The position transducer 33 is connected to a filter 35a via a line 34; an analogue to digital converter 142 is provided in the line 34. The filter 35a is connected to provide an input to a control algorithm program of the microprocessor 36 via a line 41. For convenience the program is referred to herein as "control algorithm 42".

A pressure transducer 37 is disposed in the inlet manifold of the engine to provide a signal indicative of the pressure at the inlet manifold. The pressure transducer 37 is connected to a filter 35b via a line 39; an analogue to digital converter 144 is provided in the line 39 to convert the signal fed to the filter 35b to a digital signal.

A further pressure transducer 38 is disposed upstream of a gaseous fuel flow rate control valve 55, in order to measure the pressure at this point, and provides a signal indicative of the gas pressure in this region. The pressure transducer 38 is connected to a filter 35c via a line 40; an analogue to digital converter 146 is provided in the line 40 to convert the signal fed to the filter 35c to a digital signal.

The pressure transducers 37 and 38 can be replaced by the pressure difference transducer 3 shown in Figure 1.

A speed transducer 148, which can be of the same type as the speed transducer 1 shown in Figure 1, measures the engine speed and provides a digital signal indicative of the engine speed. The speed transducer 148 is connected to a filter 35d via a line 14a. The filter 35d is connected to another input of the control algorithm 42 via a line 150.

The filters 35b and 35c are connected to a pressure difference calculator 50 via lines 49 and 51 respectively. The output of the pressure difference calculator 50 is connected to first storage means in the form of a look-up table 48 via a line 52. The look-up table 48 is similar to the look-up table 16 shown in Figure 1.

An on/off switch 58 is connected to a further input of the control algorithm 42 via a line 59. The on/off switch 58 can be a two position rocker switch with an integral lamp to indicate the switch position selected. The on/off switch 58 may be located on a control panel (not shown). The control algorithm 42 is connected to a lamp driver circuit 152 via a line 154, and the lamp driver circuit 152 is connected to a plurality of lamps (not shown). The lamps may also be provided on the control panel.

The control algorithm 42 is connected to a solenoid driver circuit 170 via line 172. The solenoid drive circuit 170 is connected to a solenoid valve 210 via a line 212. The solenoid valve is disposed in a gaseous fuel supply pipe 56.

An output of the control algorithm 42 is connected to a line 43, and the line 43 is connected to a filter 44a. The filter 44a is connected to an injection pump actuator 46 via a line 45. A digital to analogue converter 156 is provided in the line 45 to convert the digital signal outputted from the filter 44a to an analogue signal. The actuator 46 is operatively connected to the operating arm 32, thereby controlling the amount of liquid fuel supplied to the injection pumps 140.

Another output of the control algorithm 42 is connected to the look-up table 48 via line 47. The output of the look-up table 48 is connected to a filter 44b via a line 53. The filters 44a, 44b, 35a, 35b, 35c and 35d are all low pass filters substantially the same as the filters 7a, 7b, 7c and 19 in Figure 1. The control algorithm 42 and the look-up table 48 together form gaseous fuel flow rate determination means. The control algorithm 42 also includes diesel fuel flow rate determination means.

The filter 44b is connected to a gaseous fuel valve actuator 55a, via a line 54. A digital to analogue converter 158 is provided in the line 54 to convert the digital output signal of the filter 44b to an analogue signal. The gaseous fuel valve actuator 55a is connected to a gaseous fuel flow rate control valve 55 and controls the gaseous fuel flow rate control valve. The gaseous fuel valve actuator 55a and the gaseous fuel flow rate control valve 55 may be the same as the gaseous fuel valve actuator 21a and the gaseous fuel flow rate flow control valve 21 shown in Figure 1.

The control algorithm 42 includes second storage means and third storage means in the form of look-up tables 42a and 42b respectively.

The operation of the fuel control system shown in Figure 4 is as follows.

A signal indicative of engine speed is generated by the speed transducer 148 and is transmitted via line 149 to the filter 35d where it is filtered and then transmitted via the line 150 to one of the inputs of the control algorithm 42.

A signal indicative of the position of the governor 30 generated by the position transducer 33 and is transmitted via the line 34 to the filter 35a. The signal transmitted to the filter 35a is converted to a digital signal by the analogue to digital converter 142. The filtered signal from the filter 35a is transmitted via the line 41 to another of the inputs of the control algorithm 42.

The pressure transducers 37 and 38 each generate a signal indicative of the measured pressure and transmit these signals on lines 39 and 40 respectively to filters 35b and 35c respectively. Each signal is converted to a digital signal by the analogue to digital converters 144 and 146. The filtered signals are transmitted from the filters 35b and 35c via lines 49 and 51 respectively, to the pressure difference calculator 50. The pressure difference calculator 50 generates a signal indicative of the difference in the signals on the lines 49 and 51 and transmits the signal to the look-up table 48 via the line 52. In engines which are not supercharged or turbocharged, it may be sufficient to provide a single pressure transducer upstream of the gaseous fuel flow control valve, since it can be assumed that the pressure downstream of the valve is at atmospheric pressure.

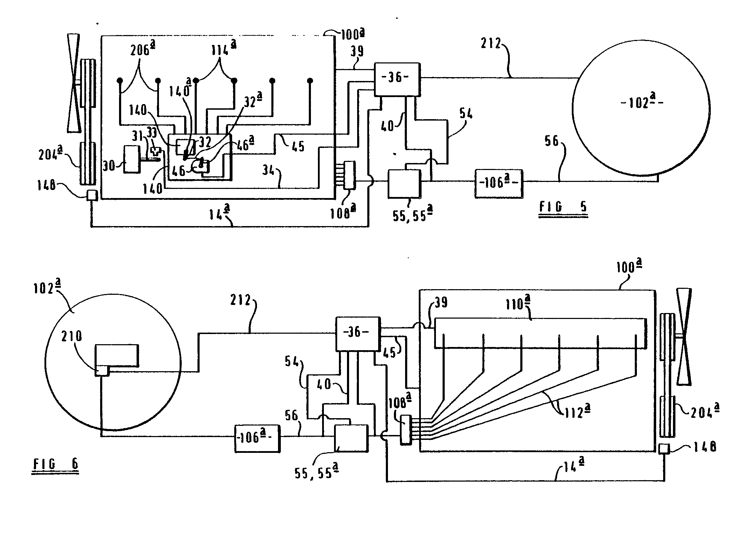

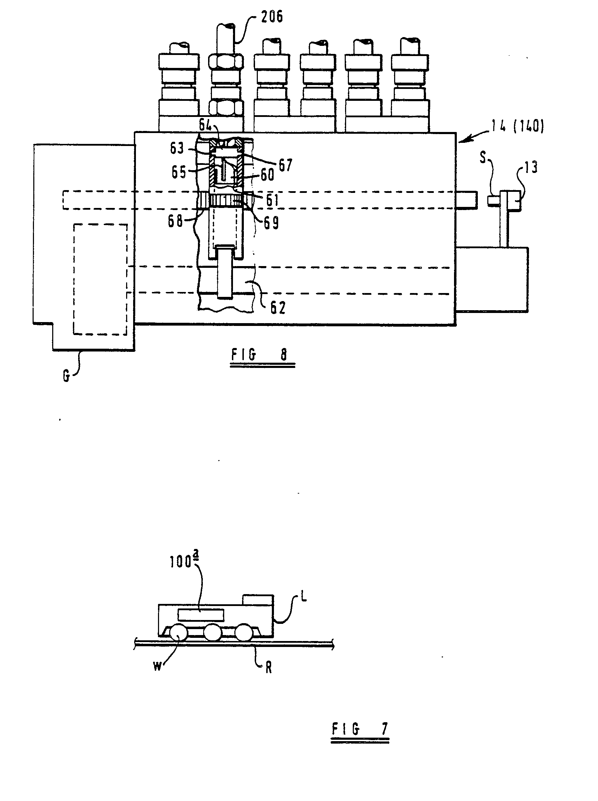

Figures 5 and 6 show the fuel control system of Figure 4 installed on an engine 100a of a railway locomotive L shown in Figure 7, the engine 100a being connected by conventional power transmission means to driving wheels W which run on rails R of the track of a railway system.

The speed transducer 148, which can be a Lucas type 4CS passive induction pickup, is mounted to the engine 100a adjacent to a crankshaft pulley 204a.

A gaseous fuel supply tank 102a is provided with a solenoid valve 210 which is actuable by the solenoid driver circuit 170 to permit of the flow of gaseous fuel along the gaseous fuel supply pipe 56. A heat exchanger 106a is provided in the supply pipe 56 to exchange heat with cooling fluid in an engine cooling system (not shown). The supply pipe 56 is connected to a gas distributor 108a which is connected to a gaseous fluid inlet 110a for each engine cylinder (not shown) by pipes 112a. The gaseous fuel inlets 110a may also serve as air inlets for each cylinder. The engine is provided with a plurality of injection pumps, one of which is shown at 140 which are connected to the diesel fuel injectors 114a for each cylinder via pipes 206a. The pumps 140 have a control spindle 140a which are connected together and to the operating arm 32 which is connected by link 32a to an output member 46a of the injection pump actuator 46. The connection between the operating arm 32 and the operating link 31 of the governor 30 is broken.

The control agorithm 42 operates as follows. The control algorithm 42 begins operation when the engine is switched on by initiating all the program variables. The microprocessor-based controller 36 is provided with a watchdog circuit which is regularly pulsed during operation of the engine.

The control algorithm 42 determines from the signal on line 59 which switch position has been selected on the switch 58. One of the switch positions corresponds to a dual fuel mode where the engine is fuelled by both gaseous and liquid fuel, and the other switch position corresponds to a single fuel mode where the engine is fuelled by liquid fuel alone.

If the switch 58 is in the single fuel position then the control algorithm 42 ignores the signal from the speed transducer 148 and converts the signal from the position transducer 33 into a liquid fuel injection pump actuator signal which is transmitted along the line 43 to the filter 44a. The filtered signal is transmitted along the line 45 where it is converted to an analogue signal by the digital to analogue converter 156, and is then transmitted to the actuator 46 which actuates the diesel injection pumps 140. The liquid fuel injection pump actuator signal is directly proportional to the position of the operating link 31, so that the quantity of liquid fuel which the actuator 46 permits the pumps 140 to inject is the same as the quantity of liquid fuel which the link 31 would permit the pumps to inject if it were not disconnected. When the switch is set to the single fuel mode the control algorithm 42 transmits a signal via line 172 to the solenoid drive circuit 170 which actuates solenoid valve 210 to turn off the gas flow through pipe 56 from the supply 102a.

When the switch 58 is in the dual fuel position then the control algorithm 42 uses the signal indicative of the position of the governor 30 to determine the desired gaseous fuel flow rate using the look-up table 42b. The control algorithm 42 uses the signal indicative of engine speed to determine a liquid fuel injection pump actuator drive signal using the look-up table 42a. A signal is transmitted on the line 172 to the solenoid drive circuit 170 to ensure that the solenoid valve 210 is open in order to permit gaseous fuel flow, although the actual gaseous fuel flow rate is not controlled by the solenoid valve 210.

The look-up table 42b contains empirical data relating the desired gaseous fuel flow rate to the position of the governor 30. The look-up table 42a contains empirical data relating engine speed to the desired liquid fuel flow rate and the magnitude of signal required by the injection pump actuation means to produce the desired liquid fuel flow rate. The amount of fuel injected per stroke is approximately 10% of the quantity of diesel fuel which must be injected if the engine were at full throttle and governed speed.

The liquid fuel injection pump actuator drive signal is transmitted, as described above, via the line 43 to the actuator 46 which actuates the injection pumps 140 to deliver the required amount of liquid fuel to the engine.

A signal indicating the desired gaseous fuel is transmitted via the line 47 to the look-up table 48 which uses the signals on lines 47 and 52 to generate a signal indicative of the desired gaseous fuel flow rate which is transmitted on the line 53 to the filter 44b. The filtered signal is transmitted on the line 54 to the actuator 55a. The signal is converted to an analogue signal by the digital to analogue converter 158. The gas valve actuator 55a actuates the valve 55 to control the gaseous fuel flow rate through the pipe 56 to the engine.

In both embodiments the gaseous fuel is liquid petroleum gas (LPG), e.g. propane, or compressed natural gas (CNG), e.g. methane, and the liquid fuel is diesel oil.

The fuel control system according to the invention may be incorporated on the engine during the construction of the vehicle. It may also be added to vehicles after this construction.

## Claims

1. A fuel control system of a compression ignition engine operable on both gaseous and diesel fuels and having means (14, 114; 140, 114a) to inject diesel fuel into the engine and a speed control, comprising an electronic signal processing means (8; 36) operable in accordance with a programme, means (1; 30) responsive to the engine speed to provide an input signal to said processing means (8; 36) gas flow rate control means (21; 55) to control the flow of the gaseous fuel at a variable rate, whereby the speed of the engine is continuously variable, responsive to an output signal of said processing means (8; 36) and derived from said input signal by operating thereon with said processing means under the control of said programme and diesel fuel control means (13; 46) controlling the injection of the diesel fuel so that the volume injected does not exceed a predetermined maximum value characterised by a transducer (1; 148) to sense engine speed and provide an input to the processing means (8; 36) which is indicative of engine speed and the input signal to said processing means (8; 36) being also dependent on the setting of the speed control, and wherein the processing means (8; 36) comprises gaseous fuel flow rate determination means:—

a) to control the gaseous fuel flow rate as a function of the instantaneous engine speed when the speed demanded is greater than the engine speed,

and to control the gaseous fuel flow rate as a function of the difference between the engine speed and the speed demanded used as a signal for a control loop calculation, when the speed demanded is less than, or equal to, the engine speed or

b) to control the gaseous fuel flow rate as a function of the output setting of a diesel fuel flow rate governor (30) to determine therefrom a desired gaseous fuel flow rate.

2. A system according to claim 1 wherein the gas flow rate control means (21; 55) is connected to a gaseous fuel inlet (110) for each engine cylinder by individual pipes (112).

3. A system according to claim 1 or claim 2 wherein said transducer (1) to sense engine speed is adapted to provide one component of said input signal which is indicative of engine speed and a further transducer (2) responsive to speed control setting is provided and is adapted to provide a further component of said input signal which is indicative of a speed demanded by said speed control setting.

4. A system according to claim 3 wherein the diesel fuel control means (13) includes injection pump control means (G) for controlling the volume of diesel fuel injected into the engine, and stop means (13) are provided for preventing the injection pump (14) from injecting more than said predetermined maximum volume of diesel fuel.

5. A system according to claim 1 or claim 2 comprising a transducer (33) responsive to the output setting of a liquid fuel flow rate governor (30) and adapted to generate a signal, indicative of said output setting, which comprises said input signal.

6. A system according to claim 5 wherein the diesel fuel control means (46) includes injection pump control means for controlling the volume of diesel fuel injected into the engine, and the injection pump control means comprises an injection pump actuator (46) operatively linked to the injection pump (140).

7. A system according to claim 6 wherein the processing means (36) comprises diesel fuel flow rate determination means responsive to at least one engine variable such as engine speed to determine from the or each variable a desired diesel fuel flow rate, and adapted to generate a diesel fuel flow rate output signal, from said processing means (36) indicative of said desired diesel fuel flow rate for the injection pump actuator (46).

8. A system according to any one of the preceding claims including means (3; 37, 38) responsive to pressure difference across the gas flow rate control means (21; 55) to provide a further input signal to the processing means (8; 36), the processing means being adapted to use said further input signal in determining said output signal.

**Patentansprüche**

1. Kraftstoffsteuersystem einer sowohl mit Gasals auch mit Dieselbrennstoffen betreibbaren Dieselmaschine, mit einer Einrichtung (14, 114; 140, 114a) zum Einspritzen von Dieselbrennstoff in die Maschine und einem Geschwindigkeitsregler, der eine gemäß einem Programm arbeitende elektronische Signalverarbeitungseinrichtung (8; 36) aufweist, mit einer auf die Geschwindigkeit der Maschine ansprechenden Einrichtung (1; 30), die ein Eingangssignal an die Verarbeitungseinrichtung (8; 36) liefert, mit einer Regeleinrichtung (21; 55) für die Gasdurchflußrate zum Regeln des Durchflusses von Gasbrennstoff bei variablem Durchsatz, wodurch die Geschwindigkeit der Maschine kontinuierlich veränderbar ist, ansprechend auf ein Ausgangssignal der Verarbeitungseinrichtung (8; 36), das von dem Eingangssignal durch Einwirken der vom Programm kontrollierten Verarbeitungseinrichtung (8; 36) abgeleitet ist, und mit einer Dieselbrennstoff-Regeleinrichtung (13; 46), die das Einspritzen von Dieselbrennstoff so regelt, daß das eingespritzte Volumen einen festgelegten Maximalwert nicht überschreitet, charakterisiert durch einen Wandler (1; 148) zum Aufnehmen der Geschwindigkeit der Maschine und zum Leifern eines die Geschwindigkeit der Maschine bezeichnenden Eingangssignals an die Verarbeitungseinrichtung (8; 36), wobei das Eingangssignal auch von der Einstellung des Geschwindigkeitsreglers abhängig ist, und in dem die Verarbeitungseinrichtung (8; 36) eine Einrichtung zum Bestimmen der Durchflußrate des Gasbrennstoffes

a) für die Regelung der Durchflußrate des Gasbrennstoffes als Funktion der momentanen Geschwindigkeit der Maschine, wenn die angeforderte Geschwindigkeit größer ist als die Geschwindigkeit der Maschine, und

für die Regelung der Durchflußrate des Gasbrennstoffes als Funktion der als Signal für eine Regelkreisberechnung benutzten Differenz der momentanen Geschwindigkeit der Maschine und der angeforderten Geschwindigkeit, wenn die angeforderte Geschwindigkeit kleiner oder gleich der Geschwindigkeit der Maschine ist, oder

b) für die Regelung der Durchflußrate des Gasbrennstoffes als Funktion der Ausgangseinstellung eines Dieselbrennstoff-Durchsatzreglers (30), um daraus eine gewünschte Durchflußrate des Gasbrennstoffes zu bestimmen, aufweist.

2. System nach Anspruch 1, bei dem die Regeleinrichtung (21; 55) für die Gasdurchflußrate mit einem Gasbrennstoff-Einlaß (110) über individuelle Leitungen (112) für jeden Zylinder verbunden ist.

3. System Anspruch 1 oder Anspruch 2, bei dem der die Geschwindigkeit der Maschine aufnehmende Wandler (1) eine Komponente des die Geschwindigkeit der Maschine bezeichnenden Eingangssignals liefert und bei dem ein weiterer, auf die Einstellung des Geschwindigkeitsreglers ansprechender Wandler (2) vorgesehen ist, der eine weitere Komponente des Eingangssignals liefert, welche eine von der Geschwindigkeitsregelereinstellung angeforderte Geschwindigkeit bezeichnet.

4. System nach Anspruch 3, bei dem die Dieselbrennstoff-Regeleinrichtung (13) eine Einspritzpumpen-Regeleinrichtung (G) zum Regeln des in die Maschine eingespritzten Dieselbrennstoffes aufweist, und bei dem eine Unterbrechereinrichtung (13) vorgesehen ist, um zu verhindern, daß die Einspritzpumpe (14) mehr als das festgelegte Maximalvolumen an Dieselbrennstoff einspritzt.

5. System nach Anspruch 1 oder Anspruch 2, das einen auf die Ausgangseinstellung eines Dieselbrennstoff-Durchsatzreglers (30) ansprechenden Wandler (33) aufweist und ein diese Ausgangseinstellung bezeichnendes Signal erzeugt, welches das Eingangssignal umfaßt.

6. System nach Anspruch 5, bei dem die Dieselbrennstoff-Regeleinrichtung (46) eine Einspritzpumpen-Regeleinrichtung zum Regeln des in die Maschine eingespritzten Volumens an Dieselbrennstoff enthält, wobei die Einspritzpumpen-Kontrolleinrichtung einen Einspritzpumpenantrieb (46) aufweist, der betriebsmäßig mit der Einspritzpumpe (140) verbunden ist.

7. System nach Anspruch 6, bei dem die Verarbeitungseinrichtung (36) eine Einrichtung zum Festlegen des Dieselbrennstoffdurchsatzes aufweist, die wenigstens auf eine Maschinenvariable, beispielsweise die Geschwindigkeit der Maschine, anspricht, um aus der oder aus jeder der Variablen eine gewünschte Dieselbrennstoff-Durchflußrate zu bestimmen, und ein Ausgangssignal der Dieselbrennstoff-Durchflußrate von der Verarbeitungseinrichtung (36) erzeugt, das die gewünschte Dieselbrennstoff-Durchflußrate für den Einspritzpumpenantrieb (46) bezeichnet.

8. System nach einem der vorangegangenen Ansprüche, das zum Liefern eines weiteren Eingangssignals an die Verarbeitungseinrichtung (8; 36) eine auf die Druckdifferenz durch die Regeleinrichtung (21; 55) für die Gasdurchflußrate ansprechende Einrichtung (3; 37, 38) enthält, wobei die Verarbeitungseinrichtung dieses weitere Eingangssignal zum Bestimmen des Ausgangssignals verwendet.

**Revendications**

1. Système de réglage du débit de carburant d'un moteur à allumage par compression pouvant fonctionner à la fois avec un carburant gazeux et un carburant diesel et ayant des moyens (14; 114; 140, 114a) pour injecter le carburant diesel dans le moteur et une commande de vitesse, comprenant des moyens de traitement d'un signal électronique (8; 36) pouvant fonctionner selon un programme, des moyens (1; 30) sensibles à la vitesse du moteur pour envoyer un signal d'entrée à ces moyens de traitement (8; 36), des moyens de réglage (21; 55) du débit de gaz pour régler un débit variable du combustible gazeux, d'où il résulte que la vitesse du moteur peut varier de façon continue en réponse à un signal de sortie de ces moyens de traitement (8; 36) résultant du traitement du signal d'entrée par ces moyens de traitement sous le contrôle du programme, et des moyens de réglage du carburant diesel (13; 46) commandant l'injection du carburant diesel de façon que le volume injecté n'excède pas une valeur maximale prédéterminée, caractérisé en ce qu'un transducteur (1; 148) mesure la vitesse du moteur et fournit une entrée aux moyens de traitement (8; 36) indicative de la vitesse du moteur, le signal d'entrée à ces moyens de traitement (8; 36) dépendant également de la position de la commande de vitesse, et en ce que les moyens de traitement (8; 36) comprennent des moyens de détermination du débit du carburant gazeux:

a) pour régler le débit du carburant gazeux en fonction de la vitesse instantanée du moteur lorsque la vitesse demandée est supérieure à la vitesse du moteur; et

pour régler le débit du carburant gazeux en fonction de la différence entre la vitesse du moteur et la vitesse demandée utilisée en tant que signal pour un calcul en boucle de commande, lorsque la vitesse demandée est inférieure ou égale à la vitesse du moteur ou

b) pour régler le débit du carburant gazeux en fonction du réglage de sortie d'un régulateur (30) du débit du carburant diesel pour en déterminer un débit désiré du carburant gazeux.

2. Système selon la revendication 1, dans lequel les moyens de réglage du débit de gaz (21; 55) sont raccordés par des tuyaux individuels (112) à une entrée de carburant gazeux (110) pour chaque cylindre du moteur.

3. Système selon la revendication 1 ou la revendication 2, dans lequel le transducteur (1) de mesure de la vitesse du moteur est adapté pour fournir une composante du signal d'entrée indicative de la vitesse du moteur, et un autre transducteur (2) sensible à la position de la commande de vitesse est adapté pour fournir une autre composante de ce signal d'entrée indicative d'une vitesse demandée par la position de la commande de vitesse.

4. Système selon la revendication 3, dans lequel les moyens de réglage du carburant diesel (13) comportent des moyens de commande (G) de la pompe d'injection pour régler le volume du carburant diesel injecté dans le moteur, et des moyens de butée (13) sont prévus pour empêcher la pompe d'injection (14) d'injecter plus que ce volume maximal prédéterminé de carburant diesel.

5. Système selon la revendication 1 ou la revendication 2, comprenant un transducteur (33) sensible au réglage de sortie d'un régulateur de débit de carburant liquide (30) et adapté pour produire un signal, indicatif de ce réglage de sortie, qui constitue le signal d'entrée.

6. Système selon la revendication 5, dans lequel les moyens de réglage du carburant diesel (46) comportent des moyens de commande de la pompe d'injection pour régler le volume du carburant diesel injecté dans le moteur, et dans lequel les moyens de commande de la pompe d'injection comportent un vérin de pompe d'injection (46) fonctionnellement relié à la pompe d'injection (140).

7. Système selon la revendication 6, dans lequel les moyens de traitement (36) comportent des moyens de détermination du débit de carburant diesel sensibles à au moins un paramètre du moteur, par exemple la vitesse du moteur, pour déterminer à partir de ce ou de chaque paramètre, un débit désiré de carburant diesel, et adaptés pour envoyer un signal de sortie de débit de carburant diesel en provenance de ces moyens de traitement (36), indicatif du débit désiré de carburant diesel, au vérin (46) de la pompe d'injection.

8. Système selon l'une quelconque des revendications précédentes, comprenant des moyens (3; 37, 38) sensibles à une différence de pression au travers des moyens de réglage du débit gazeux (21; 55) pour fournir un autre signal d'entrée aux moyens de traitement (8; 36), ces moyens de traitement étant adaptés pour utiliser cet autre signal d'entrée pour déterminer le signal de sor-tie.

Fig. 1

1

Fig. 2

Fig. 3

Fig. 4

3

FIG. 5

FIG. 6

4

FIG   8

FIG   7